# EUROPÄISCHE PATENTANMELDUNG

(11) **EP 2 317 243 A2**
(43) Veröffentlichungstag der Anmeldung: **04.05.2011**
(21) Anmeldenummer: 10189430.1
(22) Anmeldetag: 29.10.2010
(51) Int. Cl.: F24J 2/24, F24J 2/20

(54) **Flachabsorber**

(30) Priorität: 29.10.2009 AT 17092009
(71) Anmelder: DTEC GmbH, 4582 Spital am Pyhrn (AT)
(72) Erfinder: Dietl, Michael, 4582 Spital am Pyhrn (AT)
(74) Vertreter: Wirnsberger, Gernot

(57) **Zusammenfassung**

Die Erfindung betrifft einen Flachabsorber (1), umfassend ein erstes, beschichtetes Blech (2) und ein zweites Blech (3), das mit dem ersten Blech (2) verbunden ist, wobei die Bleche (2, 3) beabstandete Kanäle (4) sowie zumindest einen mit den Kanälen (4) verbundenen Zulauf und zumindest einen mit den Kanälen verbundenen Ablauf für ein Wärmeträgermedium bilden. Erfindungsgemäß ist vorgesehen, dass die Bleche (2, 3) in Bereichen zwischen den Kanälen (4) entlang einer geschlossenen Linie miteinander durchgängig verbunden sind. Des Weiteren betrifft die Erfindung ein Verfahren zur Herstellung des Flachabsorbers (1).

## Beschreibung

Die Erfindung betrifft einen Flachabsorber, umfassend ein erstes, beschichtetes Blech und ein zweites Blech, das mit dem ersten Blech verbunden ist, wobei die Bleche beabstandete Kanäle sowie zumindest einen mit den Kanälen verbundenen Zulauf und zumindest einen mit den Kanälen verbundenen Ablauf für ein Wärmeträgermedium bilden.

Des Weiteren betrifft die Erfindung ein Verfahren zum Herstellen eines Flachabsorbers, wobei in einem ersten, gegebenenfalls beschichteten Blech und/oder einem zweiten Blech Kanäle für ein Wärmeträgermedium eingeformt und die Bleche miteinander verbunden werden.

Es ist aus dem Stand der Technik bekannt, Solarkollektoren zur Warmwassererzeugung einzusetzen. Die Solarkollektoren sind in der Regel mit Flachabsorbern ausgebildet, die eine der Sonne zugewendete, im Wesentlichen ebene Fläche aufweisen, die beschichtet ist, um möglichst viel Sonnenenergie zu absorbieren. Unter dieser ebenen Fläche sind Rohre für ein Wärmeträgermedium vorgesehen, die durch die eintreffende und aufgrund der vorgesehenen Beschichtung effektiv absorbierte Sonnenenergie erwärmt werden. Die das Wärmeträgermedium führenden Rohre, z. B. gut wärmeleitende Kupferrohre, liegen hierfür unmittelbar an der beschichteten Fläche an oder sind mit dieser unmittelbar verbunden, sodass eine möglichst effiziente Wärmeübertragung auf das Wärmeträgermedium erreicht wird. Die Bleche mit den dazwischenliegenden Rohren sind in der Regel als Bestandteil einer größeren Einheit bzw. eines Flachkollektors in einer Einfassung gehalten, die z. B. aus Aluminium oder einer Aluminiumlegierung besteht und die auch eine Glasscheibe hält, die über der beschichteten Fläche liegt, sodass darunter eine abgeschlossene Kammer entsteht und die Beschichtung nicht durch Staub beschlagen oder durch andere äußere Einflüsse beeinträchtigt werden kann, was den Wirkungsgrad eines Flachkollektors reduzieren würde.

Gemäß dem Stand der Technik ist es gängige Praxis, Flachabsorber mit Kupferrohren und einem im Wesentlichen eben ausgebildeten Blech herzustellen, unter welchem die Kupferrohre angeordnet werden, in denen ein Wärmeträgermedium geführt wird. Dabei sind die Kupferrohre mit dem Blech, das der Sonne bzw. Sonneneinstrahlung zugewendet und beschichtet ist, bevorzugt stoffschlüssig verbunden, sodass ein effektiver Wärmeübergang vom beschichteten Blech zu den Kupferrohren und damit zum Wärmeträgermedium möglich ist. Die Kupferrohre sind als individuelle Rohre ausgebildet, die mit einem gemeinsamen Zulauf und einem gemeinsamen Ablauf verbunden sind. Alternativ kann ein einzelnes, eine mäanderförmige Struktur bildendes Kupferrohr vorgesehen sein.

Gemäß dem Stand der Technik ist es auch möglich, auf die Kupferrohre zu verzichten, was eine einfachere Herstellung von Flachabsorbern ermöglicht. So ist es aus der EP 1 606 565 A1 bekannt, jene Strukturen, die an sich durch (Kupfer-)Rohre realisiert werden, durch Tiefziehen oder Prägen unmittelbar in Aluminiumbleche einzubringen, die anschließend verbunden werden. Die Aluminiumbleche sind dabei durch Durchsetzfügen bzw. Clinchen verbunden, wodurch Kupferrohre oder Rohre aus anderen Materialien entbehrlich werden. Dies führt zu einer erheblichen Kostenersparnis und auch zu einer effizienten Wärmeübertragung, da ein Kanalsystem gebildet ist, das mit dem Sonnenenergie absorbierenden Blech vollflächig in Kontakt steht. Ähnlich ist aus der DE 25 46 407 bekannt, einen Flachabsorber aus zwei Blechen herzustellen, die korrespondierende, mäanderförmig verlaufende Vertiefungen aufweisen, die durch Prägen und anschließendes Verbinden der Bleche ein Kanalsystem bilden. Auch in diesem Fall erübrigen sich gesonderte Rohre.

Bei den aus dem Stand der Technik bekannten Flachabsorbern, die ohne gesonderte Rohre auskommen bzw. bei welchen ein Kanalsystem durch die Bleche selbst gebildet wird, ist nachteilig, dass diese Flachabsorber bei den gegebenen Drücken eines Wärmeträgermediums, beispielsweise 10 bar oder mehr, häufig versagen. So kann es dazu kommen, dass bei den gegebenen hohen Drücken die Bleche aufgebläht werden, sodass das Wärmeträgermedium von einem Kanal in einen anderen gelangen kann, was nicht erwünscht ist.

Aufgabe der Erfindung ist es, einen Flachabsorber der eingangs genannten Art derart weiterzubilden, dass ein Wärmeträgermedium mit hohem Druck durch denselben geführt werden kann, ohne dass der Flachabsorber beschädigt wird.

Eine verfahrensmäßige Aufgabe der Erfindung ist es, ein Verfahren der eingangs genannten Art anzugeben, mit dem ein Flachabsorber herstellbar ist, der ohne Schaden mit hohem Druck mit einem Wärmeträgermedium beaufschlagbar ist.

Die Aufgabe der Bereitstellung eines weitergebildeten Flachabsorbers wird erfindungsgemäß dadurch gelöst, dass bei einem Flachabsorber der eingangs genannten Art die Bleche in Bereichen zwischen den Kanälen entlang einer geschlossenen Linie miteinander durchgängig verbunden sind. Der Begriff Kanal ist im Zusammenhang mit der Erfindung umfassend zu verstehen und kann auch durch eine mäanderförmige Struktur realisiert sein, welche mehrere Bereiche parallel verlaufender, gerader Abschnitte aufweist, die durch gekrümmte Bereiche miteinander verbunden sind.

Ein mit der Erfindung erzielter Vorteil ist darin zu sehen, dass die vorgesehenen Kanäle, die durch die Bleche gebildet werden, voneinander doppelt isoliert sind. Durch die vorgesehene Verbindung entlang einer geschlossenen Linie werden nicht nur die Bleche miteinander haltbar verbunden, sondern wird auch erreicht, dass zwischen benachbarten Kanälen eine Art Tasche vorliegt, die zu jedem Kanal hin abdichtet. Dadurch kann jeder Kanal in seinem Randbereich von einem Teil der Linie gegen hohe Drücke von beispielsweise mehr als 10 bar gesichert sein. Ein unerwünschtes Aufblähen der Bleche ist dadurch hintangehalten.

Die Bleche können grundsätzlich entlang der geschlossenen Linien auf beliebige Art miteinander verbunden sein. Bevorzugt ist es, dass die Bleche durch Schweißen, insbesondere Laserschweißen, und/oder Durchsetzfügen bzw. Clinchen miteinander verbunden sind. Diese Fügetechniken sind in Bezug auf eine wirtschaftliche Fertigung des Flachabsorbers bevorzugt. Im Vergleich mit dem Durchsetzfügen ist wiederum das Laserschweißen bevorzugt, da beim Laserschweißen das erste Blech bereits beschichtet vorliegen kann, ohne dass das erste, beschichtete Blech beim Laserschweißen Schaden erleidet. Beim Durchsetzfügen hingegen ist es zweckmäßig, dass zuerst die Bleche miteinander verbunden werden, ehe ein Beschichten des ersten Bleches erfolgt. Diese Vorgehensweise kann allerdings zeit- und damit auch kostenintensiver sein.

Die Kanäle können grundsätzlich beliebig ausgebildet sein. Beispielsweise ist es möglich, dass die Kanäle bzw. Kanalabschnitte mäanderförmig verlaufen, wobei im Wesentlichen parallele, gerade verlaufende Kanäle endseitig durch gekrümmte Abschnitte miteinander verbunden sind. Bevorzugt ist jedoch vorgesehen, dass die Kanäle gerade ausgebildet sind und parallel zueinander verlaufen und der zumindest eine Zulauf und der zumindest eine Ablauf an gegenüberliegenden Enden der Kanäle und senkrecht zu diesen verlaufend angeordnet sind. Eine derartige, geometrisch einfache Ausbildung des Flachabsorbers bringt bei der Fertigung den Vorteil mit sich, dass die einzelnen Kanäle beispielsweise durch Tiefziehen oder Prägen in einfacher Weise erstellt werden können. In diesem Zusammenhang kann auch vorgesehen sein, dass die geschlossene Linie entlang von Randbereichen benachbarter Kanäle und dem zumindest einen Zulauf und dem zumindest einen Ablauf verläuft, sodass die geschlossene Linie zumindest annähernd ein zwischen zwei benachbarten Kanälen und dem zumindest einen Zulauf und dem zumindest einen Ablauf liegendes Rechteck bildet. Dadurch ist sichergestellt, dass die einzelnen Kanäle bzw. Zulauf und Ablauf durch dazwischenliegende Taschen soweit erforderlich voneinander getrennt sind, sodass die Kanäle bzw. Zulauf und Ablauf mit hohem Druck des Wärmeträgermediums beaufschlagbar sind.

Zweckmäßig ist es im Rahmen der Erfindung, dass sich die geschlossene Linie im Wesentlichen entlang einer Länge der Kanäle erstreckt, damit die Kanäle voneinander bestmöglich getrennt sind.

Im Rahmen der Erfindung kann insbesondere vorgesehen sein, dass die Kanäle nur im zweiten Blech eingeformt sind. Dies ermöglicht eine einfache Herstellung, da dann das erste, beschichtete Blech zur Bildung der Kanäle nicht bearbeitet werden muss. Dies bringt Vorteile mit sich, da die Beschichtung grundsätzlich sensibel ist und beispielsweise ein Tiefziehvorgang die Beschichtung beschädigen könnte. Kanäle können beispielsweise durch Rollen oder Prägen in das zweite Blech eingeformt sein. Wenn jedoch eine besonders einfache Fertigung des zweiten Bleches mit eingeformten Kanälen erforderlich ist, wird zweckmäßigerweise ein Tiefziehen angewendet.

Der zumindest eine Zulauf und der zumindest eine Ablauf sind bevorzugt im ersten Blech eingeformt. Zwar ist es so, dass das erste Blech bereits vor einem Umformvorgang beschichtet wird, allerdings können der zumindest eine Zulauf und der zumindest eine Ablauf durch Einziehen in das zweite Blech eingeformt werden, ohne dass es zu einer Beschädigung der Beschichtung kommt.

Hinsichtlich der Wahl eines Materials der Bleche bestehen keine besonderen Einschränkungen. Bevorzugt ist es jedoch, in kombinierter Betrachtung von Umformbarkeit einerseits und Wärmeleitfähigkeit andererseits, dass die Bleche aus Aluminium oder einer Aluminiumlegierung bestehen.

Die verfahrensmäßige Aufgabe der Erfindung wird dadurch gelöst, dass bei einem Verfahren der eingangs genannten Art die Bleche in Bereichen zwischen den Kanälen entlang einer geschlossenen Linie miteinander durchgängig verbunden werden.

Die verfahrensmäßig mit der Erfindung erzielten Vorteile sind insbesondere darin zu sehen, dass ein hochstabiler Flachabsorber mit hohem Wirkungsgrad auf einfache Weise bereitgestellt werden kann.

Bevorzugt ist vorgesehen, die Bleche nur durch Schweißen, insbesondere Laserschweißen, und/oder Durchsetzfügen miteinander verbunden werden, wenngleich grundsätzlich auch andere Arten der Verbindung möglich sind, zumindest in Teilbereichen, beispielsweise Kleben und/oder Falzen.

Von Vorteil ist es des Weiteren, wenn die geschlossene Linie im Wesentlichen entlang einer Länge der Kanäle ausgebildet wird, damit die einzelnen Kanäle voneinander möglichst perfekt getrennt sind.

Hinsichtlich einer wirtschaftlichen Fertigung hat es sich bewährt, wenn die Kanäle nur im zweiten Blech eingeformt werden, insbesondere durch Tiefziehen, und der Zulauf und der Ablauf im ersten Blech eingeformt werden. Dabei kann das erste Blech bereits beschichtet vorliegen.

Möglich ist es, dass die Kanäle in einem ersten Schritt in die Bleche eingeformt und anschließend die Bleche miteinander verbunden werden. Ebenso ist es aber möglich, dass die Bleche miteinander verbunden werden und die Ausbildung der Kanäle danach durch Beaufschlagung des Flachabsorbers mit Luft oder einem anderem Medium, z. B. dem späteren Wärmeträgermedium, durchgeführt wird. Dadurch erübrigt sich der Verfahrensschritt des Einformens des Kanalsystems bzw. der Kanäle, was eine besonders einfache Fertigung erlaubt.

Weitere Merkmale, Vorteile und Wirkungen der Erfindung ergeben sich aus dem nachstehend dargestellten Ausführungsbeispiel derselben. In den Zeichnungen, auf welche dabei Bezug genommen wird, zeigen:
- Fig. 1: einen Flachabsorber in rückseitiger perspektivischer Darstellung;
- Fig. 2: eine stirnseitige Ansicht eines Flachabsorbers;
- Fig. 3: eine rückseitige Draufsicht auf einen unteren Teil eines Flachabsorbers;
- Fig. 4: einen Schnitt gemäß der Linie IV-IV in Fig. 2 in vergrößerter Darstellung;
- Fig. 5: einen vergrößerten Ausschnitt des Bereiches V in Fig. 4;
- Fig. 6: eine stirnseitige Ansicht eines ersten Bleches;
- Fig. 7: eine Draufsicht auf das Blech gemäß Fig. 6;
- Fig. 8: den Bereich VIII gemäß Fig. 6 in vergrößerter Darstellung;
- Fig. 9: eine stirnseitige Ansicht eines zweiten Bleches;
- Fig. 10: eine Draufsicht auf das Blech gemäß Fig. 9;
- Fig. 11: einen Schnitt gemäß der Linie XI-XI in Fig. 9 in vergrößerter Darstellung;
- Fig. 12: eine vergrößerte Darstellung des Bereiches XII in Fig. 11.

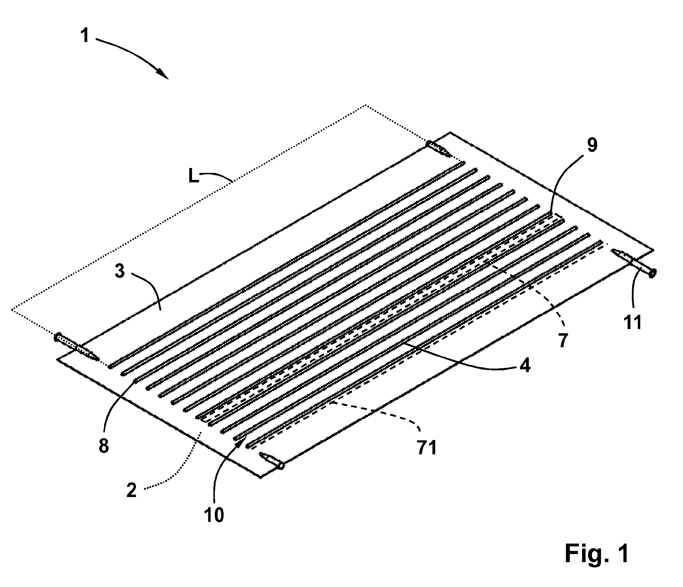

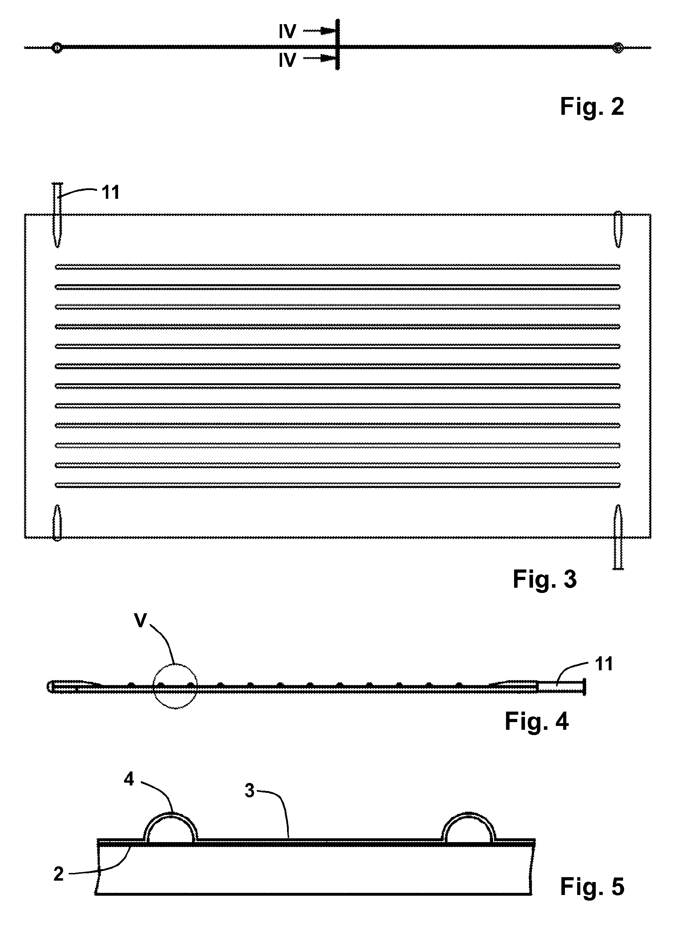

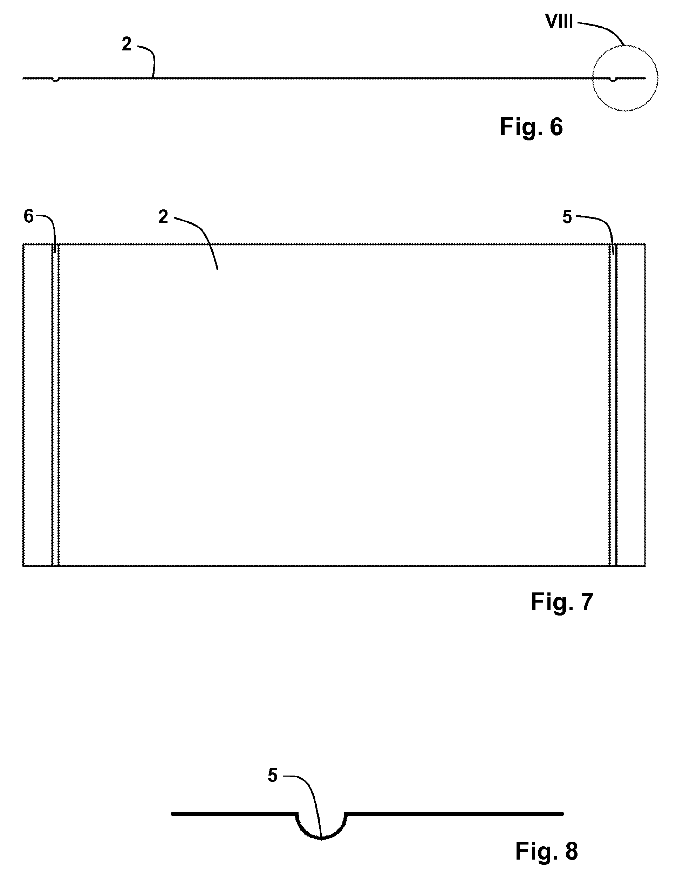

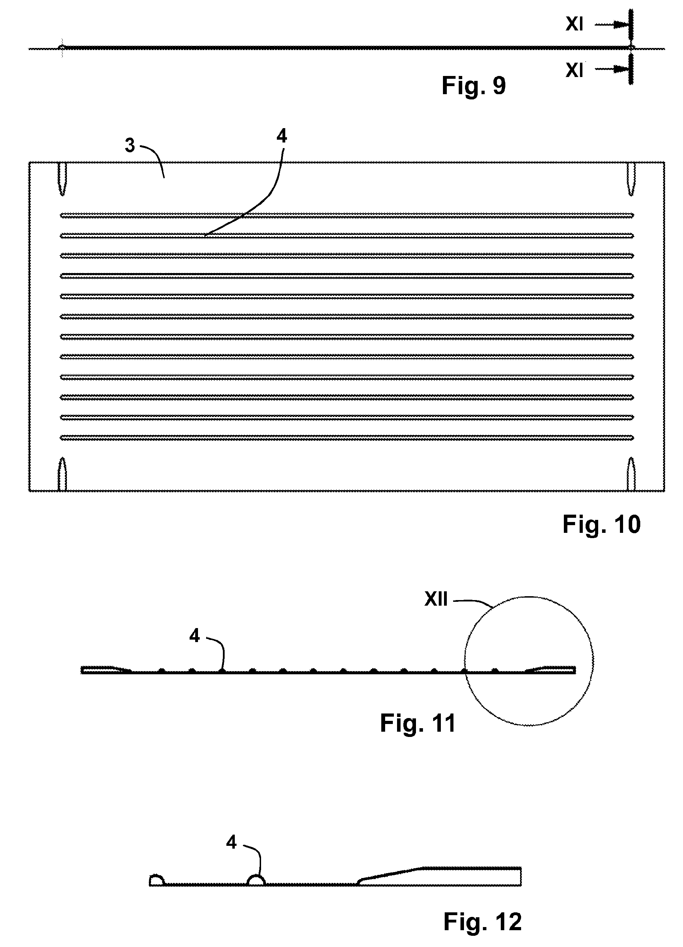

In Fig. 1 bis 12 sind ein erfindungsgemäßer Flachabsorber 1 und Teile davon näher dargestellt. Übrige Komponenten eines Flachkollektors wie eine Einfassung und eine Glasscheibe sind der Übersichtlichkeit wegen in der Regel nicht gezeigt. Der Flachabsorber 1 umfasst ein erstes Blech 2, das beschichtet ist, und zwar mit einer Beschichtung, die eine möglichst effiziente Absorption von Sonnenenergie gewährleistet. Das erste Blech 2 ist im Einsatz des Flachabsorbers 1 bzw. Flachkollektors der Sonne zugewendet. Des Weiteren umfasst der Flachabsorber 1 ein zweites Blech 3, das im Einsatz der Sonne abgewendet ist. In diesem zweiten Blech 3 ist eine Vielzahl von geraden Kanälen 4 gleicher Länge L eingeformt. Hingegen sind im ersten Blech 2 ein im Querschnitt halbrunder Zulauf 5 und ein ebenfalls im Querschnitt halbrunder Ablauf 6 eingeformt.

Der Flachabsorber 1 ist rechteckig ausgebildet, also mit einer kürzeren Breitseite und einer längeren Längsseite, wenngleich auch andere Ausbildungen möglich sind. Die parallelen Kanäle 4 erstrecken sich im Wesentlichen entlang einer Breitseite des Flachabsorbers 1, wohingegen sich der Zulauf 5 und der Ablauf 6 senkrecht hierzu entlang von Längsseiten des Flachabsorbers 1 erstrecken. Ein um 90° gedrehter Verlauf der Kanäle 4 und des Zulaufs 5 sowie des Ablaufs 6 ist ebenso wie ein anderer Verlauf möglich. Während die Kanäle 4 mit halbrundem Querschnitt nur im zweiten Blech 3 eingeformt sind, sind Zulauf 5 und Ablauf 6 nur im ersten Blech 2 eingeformt, und zwar ebenfalls mit halbrundem Querschnitt. Die beiden Bleche 2, 3, die bevorzugt aus Aluminium oder einer Aluminiumlegierung bestehen, sind entlang einer geschlossenen Linie 7 jeweils zwischen den Kanälen 4 miteinander verbunden. Die geschlossenen Linien 7, von denen in Fig. 1 nur eine angedeutet ist, erstrecken sich im Wesentlichen entlang benachbarter Kanäle 4. Im Bereich äußerster Kanäle 4 kann die geschlossene Linie 7, beispielsweise eine Schweißnaht, durch eine einzelne, gerade Linie 71 ersetzt sein. Analoges gilt für die Außenseiten von Zulauf 5 und Ablauf 6. Die geschlossenen Linien 7 isolieren bzw. trennen die einzelnen Kanäle 4 doppelt voneinander. Dies ermöglicht es, dass ein Wärmeträgermedium, welches durch den Zulauf 5 zugeführt und durch den Ablauf 6 abgeführt wird, mit einem hohen Druck von beispielsweise mehr als 10 bar durch den Flachabsorber 1 geführt werden kann, ohne dass dieser Schaden erleidet. Zulauf 5 und Ablauf 6, die sich wie erwähnt senkrecht zu den Kanälen 4 erstrecken, sind in ihrer Position im ersten, mit einem Absorptionsmittel beschichteten Blech 2 so angeordnet, dass der Zulauf 5 und der Ablauf 6 im Bereich von Enden 8, 9 der Kanäle 4 liegen, um einen Transport des Wärmeträgermediums durch den Flachabsorber 1 zu ermöglichen. Das zweite Blech 3 weist keine Teilstruktur in Bezug auf den Zulauf 5 bzw. den Ablauf 6 auf, wenngleich Zulauf 5 und Ablauf 6 auch so durch korrespondierende Strukturen in den Blechen 2, 3 gebildet sein können, dass Zulauf 5 und Ablauf 6 im Querschnitt beispielsweise im Wesentlichen rund ausgebildet sind. Eine gleichzeitige Fertigung von exakten Teilstrukturen des Zulaufs 5 und des Ablaufs 6 zusammen mit den Kanälen 4 im zweiten Blech 3 durch Tiefziehen ist allerdings schwierig.

Die geschlossenen Linien 7 zwischen benachbarten Kanälen 4 sind bevorzugt so angeordnet, dass diese in Randbereichen 10 der im Querschnitt halbrunden Kanäle 4 liegen. Dadurch sind die einzelnen Kanäle 4 perfekt gegenüber den dazwischenliegenden Bereichen isoliert. Randbereich 10 bedeutet in diesem Zusammenhang einen Abstand von weniger als 1,0 cm vom Rand eines Kanals 4.

Für den Zulauf 5 bzw. Ablauf 6 ist es zweckmäßig, entsprechende Anschlussstücke 11 1 vorzusehen. Ausnehmungen für diese Anschlussstücke 11 können wie in Fig. 1 bis 12 dargestellt durch die Bleche 2, 3 gemeinsam gebildet sein, sodass durch die Bleche 2, 3 Aufnahmen für im Querschnitt kreisförmigen Anschlussstutzen gebildet werden, durch die ein Wärmeträgermedium in den Flachabsorber 1 eingeführt bzw. abgeführt wird. Grundsätzlich ist es aber auch möglich, dass die Anschlussstücke 11 bloß im ersten Blech 2 oder zweiten Blech 3 aufgenommen sind. In den Anschlussstücken 11 gegenüberliegenden Bereichen ist der Zulauf 5 wie auch der Ablauf 6 verschlossen.

Ein erfindungsgemäßer Flachabsorber 1 kann wie folgt hergestellt werden: In einem ersten Schritt werden zwei rechteckige, etwa gleiche Abmessungen aufweisende Bleche 2, 3 aus Aluminium oder einer Aluminiumlegierung bereitgestellt. Derartige Bleche 2, 3 lassen sich leicht umformen. Die Bleche 2, 3 können aber auch aus anderen Materialien bestehen. Von Vorteil ist es jedoch, wenn zwei Bleche 2, 3 aus Aluminium oder einer Aluminiumlegierung mit einer Stärke von weniger als 1 mm eingesetzt werden. Das erste Blech 2 kann z. B. eine Stärke von 0,7 bis 0,9 mm, vorzugsweise etwa 0,8 mm, und das zweite Blech 3 z. B. eine Stärke von 0,2 bis 0,6 mm, vorzugsweise etwa 0,5 mm, aufweisen. In das erste, bereits beschichtete Blech 2 werden durch Einziehen Zulauf 5 und Ablauf 6 eingeformt. Da das erste Blech 2 bei diesem Vorgang lediglich an einer Breitseite zu fixieren ist, während eine zweite Breitseite nicht fixiert werden muss, ist das erste Blech 2 bei diesem Umformen keiner allzu großen Belastung ausgesetzt, sodass das erste Blech 2 bereits vorher mit einer Sonnenenergie effektiv absorbierenden Beschichtung beschichtet werden kann. Zulauf 5 und Ablauf 6 werden im Querschnitt halbkreisförmig und entlang der Längsseiten des ersten Bleches 2 gerade verlaufend eingeformt. In das zweite Blech 3, das im Einsatz einer Sonneneinstrahlung abgewendet ist, werden durch Tiefziehen parallele Kanäle 4 mit konstantem Abstand voneinander eingeformt, die gerade ausgebildet sind und senkrecht zum Zulauf 5 und zum Ablauf 6 verlaufen, wobei Enden 8, 9 der Kanäle 4 im Bereich von Zulauf 5 bzw. Ablauf 6 liegen, sodass nach Verbinden der Bleche 2, 3 ein Wärmeträgermediumtransport möglich ist. In beiden Blechen 2, 3 werden Ausnehmungen für einzusetzende Anschlussstücke 11 für eine Verbindung mit Rohren zum Zu- bzw. Ableiten des Wärmeträgermediums vorgesehen, wohingegen die den Anschlusstücken 11 gegenüberliegenden Bereiche des Zulaufs 5 bzw. des Ablaufs 6 verschlossen werden. Anschließend werden die Bleche 2, 3 aufeinander angeordnet und so fixiert. Danach werden die Bleche 2, 3 miteinander verbunden, und zwar beispielsweise entweder durch Durchsetzfügen bzw. Clinchen oder bevorzugt durch Schweißen, insbesondere Laserschweißen. Dabei erfolgt ein durchgängiges Verbinden der Bleche 2, 3 beispielsweise so, dass zwischen den Kanälen 4 rechteckige, geschlossene Verbindungsnähte durch Schweißen erstellt werden, die sich im Wesentlichen entlang einer vollen Länge L der Kanäle 4 erstrecken und in den übrigen Bereichen parallel zum Zulauf 5 bzw. Ablauf 6 des ersten Bleches 2 verlaufen. Einzelne Schweißnähte sind in den außenseitigen Bereichen des Zulaufs 5, des Ablaufs 6 und außenseitig liegender Kanäle 4 vorgesehen. Schließlich werden die Anschlussstücke 11 mit Zuleitungen kontaktiert, sodass das Wärmeträgermedium durch den Flachabsorber 1 gefördert werden kann. Anschließend wird der Flachabsorber 1 mit üblichen Komponenten wie einem Dämmmaterial, einer Glasscheibe und einer Einfassung versehen, um einen Flachkollektor zu bilden.

Alternativ zur vorstehend beschriebenen Vorgehensweise ist es auch möglich, auf die Umformschritte nahezu weitgehend zu verzichten. In diesem Fall werden die Bleche 2, 3 zuerst miteinander verbunden, beispielsweise wie vorstehend beschrieben, wobei lediglich im ersten Blech 2 Zulauf 5 und Ablauf 6 eingeformt sind. Es liegen also die Verbindungsnähte bzw. Taschen sowie Zulauf 5 und Ablauf 6 vor. Anschließend wird der Flachabsorber 1 mit Luft oder einem anderen Medium, z. B. dem späteren Wärmeträgermedium, beaufschlagt. Dies führt dazu, dass die Kanäle 4 ausgebildet werden. Die Ausbildung der Kanäle 4 kann dabei über die Stärke der Bleche 2, 3 gesteuert werden. Ist beispielsweise das erste Blech 2 mit einer deutlich größeren Stärke bzw. Dicke als das zweite Blech 3 ausgebildet, wird nur das zweite Blech 3 aufgeweitet. Es kann aber auch vorgesehen und durchaus wünschenswert sein, dass nur das erste Blech 2 aufgeweitet wird, insbesondere um eine effektive Absorption von Sonnenenergie zu ermöglichen, was durch eine relativ vergrößerte Fläche des ersten Bleches 2 erreicht werden kann.

Der vorstehend beschriebene und in Fig. 1 bis 12 dargestellte Flachabsorber 1 ist Teil eines Flachkollektors, der wie bereits erwähnt eine Einfassung umfasst, die vorzugsweise aus Aluminium oder einer Aluminiumlegierung gebildet ist und neben den Blechen 2, 3 auch eine Glasscheibe in Position hält, die über dem ersten, beschichteten Blech 2 angeordnet ist, sodass das erste Blech 2 gegen Ablagerungen von Staub oder andere Umwelteinflüsse geschützt ist. An einer Rückseite des zweiten Bleches 3 kann ein Dämmmaterial angeordnet sein, das ebenfalls von der Einfassung in Position gehalten wird. Das Dämmmaterial dient einer guten Isolierung, damit das Wärmeträgermedium, z. B. Wasser oder eine Wasser-Alkohol-Mischung, auf eine möglichst hohe Temperatur erwärmt wird. Die Anschlusstücke 11 ragen aus dem Flachkollektor hervor und werden beim Betrieb mit einer geeigneten Zuleitung bzw. Ableitung verbunden.

Ein erfindungsgemäßer Flachabsorber 1 zeichnet sich insbesondere durch eine hohe Betriebsstabilität aus, auch wenn das Wärmeträgermedium mit hohen Drücken von 10 bar oder mehr durch den Flachabsorber 1 gefördert wird. Darüber hinaus kann der Flachabsorber 1 mit relativ dünnen Ausgangsblechen gefertigt werden, ohne dass diese im Betrieb zu einem Aufblähen neigen. Dies ist von Vorteil, weil durch einen Einsatz dünner Ausgangsbleche im Vergleich mit relativ dicken Ausgangsblechen eine Materialersparnis gegeben ist. Gleichzeitig ermöglicht ein Einsatz dünner Ausgangsbleche ein einfaches Tiefziehen und begünstigt auch ein einfaches Verbinden der Bleche 2, 3 durch Laserschweißen.

## Patentansprüche

1. Flachabsorber (1), umfassend ein erstes, beschichtetes Blech (2) und ein zweites Blech (3), das mit dem ersten Blech (2) verbunden ist, wobei die Bleche (2, 3) beabstandete Kanäle (4) sowie zumindest einen mit den Kanälen (4) verbundenen Zulauf (5) und zumindest einen mit den Kanälen (4) verbundenen Ablauf (6) für ein Wärmeträgermedium bilden, **dadurch gekennzeichnet, dass** die Bleche (2, 3) in Bereichen zwischen den Kanälen (4) entlang einer geschlossenen Linie (7) miteinander durchgängig verbunden sind.

2. Flachabsorber (1) nach Anspruch 1, **dadurch gekennzeichnet, dass** die Bleche (2, 3) durch Schweißen, insbesondere Laserschweißen, und/oder Durchsetzfügen miteinander verbunden sind.

3. Flachabsorber (1) nach Anspruch 1 oder 2, **dadurch gekennzeichnet, dass** die Kanäle (4) gerade ausgebildet sind und parallel zueinander verlaufen und der zumindest eine Zulauf (5) und der zumindest eine Ablauf (6) an gegenüberliegenden Enden (8, 9) der Kanäle (4) und senkrecht zu diesen verlaufend angeordnet sind.

4. Flachabsorber (1) nach Anspruch 3, **dadurch gekennzeichnet, dass** die geschlossene Linie (7) entlang von Randbereichen (10) benachbarter Kanäle (4) und dem zumindest einen Zulauf (5) und dem zumindest einen Ablauf (6) verläuft, sodass die geschlossene Linie (7) zumindest annähernd ein zwischen zwei benachbarten Kanälen (4) und dem zumindest einen Zulauf (5) und dem zumindest einen Ablauf (6) liegendes Rechteck bildet.

5. Flachabsorber (1) nach einem der Ansprüche 1 bis 4, **dadurch gekennzeichnet, dass** sich die geschlossene Linie (7) im Wesentlichen entlang einer Länge (L) der Kanäle (4) erstreckt.

6. Flachabsorber (1) nach einem der Ansprüche 1 bis 5, **dadurch gekennzeichnet, dass** die Kanäle (4) nur im zweiten Blech (3) eingeformt sind.

7. Flachabsorber (1) nach Anspruch 6, **dadurch gekennzeichnet, dass** die Kanäle (4) durch Tiefziehen eingeformt sind.

8. Flachabsorber (1) nach einem der Ansprüche 1 bis 7, **dadurch gekennzeichnet, dass** der zumindest eine Zulauf (5) und der zumindest eine Ablauf (6) im ersten Blech (2) eingeformt sind.

9. Flachabsorber (1) nach Anspruch 8, **dadurch gekennzeichnet, dass** der zumindest eine Zulauf (5) und der zumindest eine Ablauf (6) durch Einziehen eingeformt sind.

10. Flachabsorber (1) nach einem der Ansprüche 1 bis 9, **dadurch gekennzeichnet, dass** die Bleche (2, 3) aus Aluminium oder einer Aluminiumlegierung bestehen.

11. Verfahren zum Herstellen eines Flachabsorbers (1), wobei in einem ersten, gegebenenfalls beschichteten Blech (2) und/oder einem zweiten Blech (3) Kanäle (4) für ein Wärmeträgermedium eingeformt und die Bleche (2, 3) miteinander verbunden werden, **dadurch gekennzeichnet, dass** die Bleche (2, 3) in Bereichen zwischen den Kanälen (4) entlang einer geschlossenen Linie (7) miteinander durchgängig verbunden werden.

12. Verfahren nach Anspruch 11, **dadurch gekennzeichnet, dass** die Bleche (2, 3) nur durch Schweißen, insbesondere Laserschweißen, und/oder Durchsetzfügen miteinander verbunden werden.

13. Verfahren nach Anspruch 11 oder 12, **dadurch gekennzeichnet, dass** die geschlossene Linie (7) im Wesentlichen entlang einer Länge (L) der Kanäle (4) ausgebildet wird.

14. Verfahren nach einem der Ansprüche 11 bis 13, **dadurch gekennzeichnet, dass** die Kanäle (4) nur im zweiten Blech (3) eingeformt werden, insbesondere durch Tiefziehen, und der Zulauf (5) und der Ablauf (6) im ersten Blech (2) eingeformt werden.

15. Verfahren nach einem der Ansprüche 11 bis 14, **dadurch gekennzeichnet, dass** die Bleche (2, 3) miteinander verbunden werden und die Ausbildung der Kanäle (4) danach durch Beaufschlagung des Flachkollektors (1) mit Luft oder einem anderen Medium, z. B. dem späteren Wärmeträgermedium, durchgeführt wird.
